Europäisches Patentamt

European Patent Office

Office européen des brevets

(19)

(11) EP 0 784 070 A1

(12) DEMANDE DE BREVET EUROPEEN

(43) Date de publication:
16.07.1997 Bulletin 1997/29

(51) Int Cl.⁶: **C08K 5/10**, C08L 75/04
// (C08L75/04, 23:08),
(C08L75/04, 51:06)

(21) Numéro de dépôt: 96402604.1

(22) Date de dépôt: 02.12.1996

(84) Etats contractants désignés:
**BE CH DE FI FR GB IT LI NL SE**

(30) Priorité: **13.12.1995 FR 9514795**

(71) Demandeur: **ELF ATOCHEM S.A.**
**92800 Puteaux (FR)**

(72) Inventeurs:
• **Bonnet, Evelyne**
**60260 Lamorlaye (FR)**
• **Flat, Jean-Jacques**
**27470 Serquigny (FR)**
• **Fontela, Jacques**
**27300 Bernay (FR)**

(54) **Composition plastifiée à base de polyol ayant une viscosité contrôlée**

(57)    L'invention concerne une composition plastifiée à base de polyol qui comprend une quantité suffisante d'un additif viscosifiant pour obtenir une viscosité à 20°C au moins égale à 4 Pa.s.

Cette composition plastifiée est utilisable pour l'obtention de gel de polyuréthane.

Printed by Jouve, 75001 PARIS (FR)

## Description

L'invention concerne une composition plastifiée ayant une viscosité contrôlée à base d'au moins un polyol, utilisable notamment pour l'obtention de gels de polyuréthane. L'invention concerne aussi ces gels de polyuréthane.

Le terme gel doit être compris comme décrivant l'état physique du produit final.

On désigne donc présentement sous les termes gel de polyuréthane, un polyuréthane plastifié obtenu par mise en contact d'une composition plastifiée (I) à base d'au moins un polyol avec au moins un polyisocyanate.

Pour certaines applications électriques très spécifiques telles que l'isolation électrique ou le remplissage de câbles, ou bien encore pour des applications paramédicales (matelas et coussins anti-escarre, prothèse mammaire), on recherche des gels de polyuréthane qui possèdent une faible consistance et qui sont obtenus rapidement après avoir mis en contact la composition (I) avec un polyisocyanate.

Plus précisément, il est recherché des compositions plastifiées (I) à base de polyols possédant, à température ambiante (environ 20°C), une viscosité élevée, égale ou supérieure à 4Pa.s et dont les réactifs (polyols) sont susceptibles de réagir avec le polyisocyanate.

Les compositions plastifiées connues contiennent des taux de plastifiant élevés qui sont de nature à abaisser considérablement la viscosité desdites compositions à base de polyols.

Ainsi, dans le brevet US 4787905, on décrit un gel utilisable pour la confection de prothèse mammaire. A cet effet, il est réalisé une composition plastifiée de faible viscosité contenant 10 % en poids d'un polydiène polyol et 90 % en poids de phtalate d'undécyle.

De même dans le brevet US 4 666 968, on décrit un gel de polyuréthane de faible viscosité utilisable dans l'isolation électrique et contenant une teneur élevée en plastifiant. Ce gel est notamment obtenu par mise en contact d'une compostiion plastifiée contenant un polyisocyanate avec une composition fortement plastifiée contenant des polyols.

Le brevet US 5 258 578 décrit également des gels de polyuréthane de faible viscosité utilisables pour les terminaisons de câble et les boitiers de raccordement.

Pour augmenter la viscosité de telles compositions fortement plastifiées, la demanderesse a utilisé des plastifiants plus visqueux, mais ces plastifiants présentaient l'inconvénient d'être peu ou pas miscibles avec les constituants de la composition et conduisaient à des séparations de phase (démixtion).

On a maintenant trouvé une composition plastifiée (I) comprenant au moins un polyol, au moins un plastifiant, éventuellement un catalyseur, éventuellement un ou plusieurs allongeurs de chaînes, caractérisée en ce qu'elle comprend en plus une quantité suffisante d'un additif viscosifiant, pour obtenir une viscosité à 20°C au moins égale à 4 Pa.s et, de préférence, comprise entre 5 Pa.s et 300 Pa.s mesurée à une pulsation de 10 rad/s en rhéologie dynamique.

Selon la présente invention, on désigne par additif viscosifiant un polymère thermoplastique permettant d'augmenter la viscosité de la composition plastifiée (I) à base de polyol.

Les additifs viscosifiants utilisables selon la présente invention sont choisis parmi:

- ◆ a/ les copolymères d'éthylène et d'au moins une $\alpha$-oléfine possédant de 3 à 8 atomes de carbone ayant une densité allant de 0,89 à 0,95 environ ;
- ◆ b/ les copolymères d'éthylène et d'au moins un ester vinylique d'acide carboxylique saturé ayant 2 à 6 atomes de carbone tel que l'acétate de vinyle ;
- ◆ c/ les copolymères éthylène/ester d'acide insaturé, ledit acide présentant de préférence une insaturation éthylénique adjacente au groupe carboxylique. L'acide insaturé est de préférence un mono-acide tel que l'acide acrylique, l'acide méthacrylique, l'acide crotonique ou l'acide cinnamique. Il peut également s'agir d'un diacide tel que l'acide maléique, l'acide fumarique, l'acide citraconique, l'acide glutaconique ou l'acide muconique. Dans le cas des diacides, l'ester d'acide insaturé peut être un mono-ester ou, de préférence, un diester. L'alcool duquel dérive l'ester d'acide insaturé comprend de préférence de 1 à 8 atomes de carbone. Le groupe estérifiant peut être linéaire ou ramifié, tel que par exemple méthyle, éthyle, n-propyle, isopropyle, n-butyle, isobutyle, tertiobutyle, isoamyle, n-hexyle, 2-éthylhexyle ou isooctyle;
- ◆ d/ les terpolymères qui, en plus des motifs dérivés de l'éthylène et ceux dérivés d'un ester vinylique d'acide carboxylique saturé des copolymères b/ ou en plus des motifs dérivés de l'éthylène et ceux dérivés d'un ester d'acide insaturé des copolymères c/, comprennent des motifs dérivés d'un anhydride d'acide dicarboxylique insaturé, ceux-ci pouvant être présents en une proportion allant jusqu'à 5 % environ en poids dans le copolymère. L'anhydride présent peut être choisi parmi l'anhydride citraconique, l'anhydride itaconique, l'anhydride tétrahydrophtalique et, de préférence, l'anhydride maléique ;
- ◆ e/ les terpolymères qui, en plus des motifs dérivés de l'éthylène et ceux dérivés de l'ester d'acide insaturé des copolymères c/, comprennent des motifs dérivés d'un monomère glycidylique insaturé, ceux-ci pouvant être présents en une proportion allant jusqu'à 18 % environ en poids dans le copolymère. Le monomère glycidylique peut être choisi notamment parmi les méthacrylates et acrylates de glycidyle, les itaconates de mono- et diglycidyle, butènetricarboxylate de mono-, di- et triglycidyle et ;

◆ f/ les polymères greffés résultant du greffage d'au moins un monomère choisi parmi les acides carboxyliques à insaturation éthylénique, les anhydrides correspondant et les dérivés de ces acides et anhydrides d'acides sur les copolymères a/, b/ et c/ et sur les terpolymères d/.

Selon l'invention, on utilise de préférence les copolymères éthylène/acétate de vinyle ; les copolymères éthylène/acrylate d'alkyle tels que les copolymères éthylène/acrylate de butyle ; les terpolymères éthylène/acétate de vinyle/anhydride maléique et les terpolymères éthylène/acrylate d'alkyle/anhydride maléique tels que les terpolymères éthylène/acrylate d'éthyle/anhydride maléique.

Selon la présente invention, la viscosité de la composition plastifiée (I) à base de polyol pourra être obtenue moyennant l'emploi d'au moins 5 parties en poids d'additif viscosifiant pour 100 parties en poids de polyol et, de préférence, 30 à 110 parties en poids.

Parmi les plastifiants utilisables selon la présente invention, on citera les esters d'acides carboxyliques divalents ou polyvalents.

A titre d'exemples de tels acides polycarboxyliques, on citera les acides succinique, phtaliques, trimellitique, fumarique, les acides gras dimères et trimères comme l'acide oléique, éventuellement en mélange avec des acides gras monomères, les anhydrides phtaliques, tétrahydro- et hexahydro-phtaliques, endométhylène-tétrahydrophtalique, glutarique, maléique. Parmi les alcools esterifiant les acides et les anydrides, on citera des alcools aliphatiques ramifiés ou non ayant un nombre de carbone allant de 1 à 20 tels que le méthanol, l'éthanol, le propanol, l'isopropanol, le n-butanol, le sec-butanol, le tert.-butanol, les divers isomères de l'alcool pentylique, de l'alcool hexylique, de l'alcool octylique (par exemple le 2-éthylhexanol), de l'alcool nonylique, de l'alcool décylique, de l'alcool laurylique, de l'alcool myristylique, de l'alcool cétylique, de l'alcool stérarylique ainsi que les alcools de matières grasses et de cires d'origine naturelle ou obtenus par hydrogénation d'acides carboxyliques d'origine naturelle. Les alcools cycloaliphatiques tels que le cyclohexanol et ses homologues peuvent être utilisés. On peut également utiliser des composés aromatiques hydroxylés comme le phénol, le crésol, le thymol, le carvacrol, l'alcool benzylique et l'alcool phényléthylique.

On peut utiliser aussi des plastifiants phosphorés tels que les esters des alcools aliphatiques ramifiés ou non, cycloaliphatiques ou aromatiques mentionnés ci-dessus et de l'acide orthophosphorique.

On peut utiliser également des plastifiants polymères tels que par exemple les polyesters de l'acide adipique, de l'acide sebacique ou de l'acide phtalique, ainsi que des oligomères de polybutadiène, de polyisoprène et de polyisobutène.

Parmi ces plastifiants, on utilise de préférence les phtalates d'alkyle tels que le phtalate de dioctyle et le phtalate de diisotridécyle.

Selon la présente invention, le plastifiant représente au moins 10 parties en poids pour 100 parties en poids de polyol et, de préférence 50 à 1000 parties en poids.

Selon la présente invention, les polyols utilisables ont une masse moléculaire moyenne en nombre $\overline{Mn}$ allant de 500 à 15 000.

De préférence, on utilisera des polyols ayant une masse moléculaire moyenne en nombre $\overline{Mn}$ allant de 1 000 à 3 000.

Les polyols utilisables selon la présente invention peuvent être choisis parmi les polyesters-polyols, les polyéthers-polyols, les polythioéthers-polyols, les polyacétals-polyols, les polycarbonates-polyols, les polyestéramides-polyols, les polyamides-polyols, les polydiènes-polyols et le mélange d'au moins deux des polyols précités.

A titre de polyesters portant des groupes hydroxy, on citera les produits de réaction d'alcools polyvalents, de préférence divalents, accompagnés éventuellement d'alcools trivalents, et d'acides carboxyliques polyvalents, et de préférence divalents. A la place des acides polycarboxyliques libres, on peut également utiliser à la préparation des polyesters les anhydrides d'acides polycarboxyliques correspondants ou esters d'acides polycarboxyliques et d'alcools inférieurs correspondants ou leurs mélanges. Les acides polycarboxyliques peuvent être de nature aliphatique, cycloaliphatique, aromatique et/ou hétérocyclique et éventuellement substitués, par exemple par des atomes d'halogène, et/ou saturés.

A titre d'illustration de tels acides carboxyliques et dérivés, on citera : les acides succinique, adipique, subérique, azélaïque, sébacique, phtalique, trimléllitique, les anhydrides phtalique, tétrahydrophtalique, hexahydrophtalique, tétrachlorophtalique, endométhylène-tétrahydrophtalique, glutarique, l'acide maléique, l'anhydride maléique, l'acide fumarique, les acides gras insaturés dimérisés et trimérisés éventuellement en mélange avec des acides gras insaturés monomères comme l'acide oléique ; le téréphtalate de diméthyle et le téréphtalate de bis-glycol.

Parmi les alcools polyvalents, on citera par exemple le 1,2-éthanédiol, le 1,2-etl,3-propanediol, le 1,4-et 2,3-butanediol, le 1,6-hexanediol, le 1,8-octanediol, le glycol néopentylique, le 1,4-bis-hydroxyméthylcyclohexane, le 2-méthyl-1,3-propanediol, le glycérol, le triméthylolpropane, le 1,2,6-hexanetriol, le 1,2,4-butanetriol, le triméthyloléthane, le pentaérythritol, le quinitol, le mannitol, le sorbitol, le formitol, le méthylglucoside, et également le diéthylène-glycol, le triéthylène-glycol, le tétra-éthylène-glycol et les polyéthylène-glycols supérieurs, le dipropylène-glycol et les propylènes-glycols supérieurs et le dibutylène-glycol et les polybutylène-glycols supérieurs. Les polyesters peuvent porter des groupes carboxyle dans certaines positions terminales. On peut égalemnt utiliser des polyesters de lactones, par exemple de l'epsilon-caprolactone, ou d'acides hydroxycarboxyliques, par exemple de l'acide oméga-hydroxycaproïque.

Les polyethers-polyols utilisables selon l'invention portant au moins 2, en général 2 à 8, de péférence 2 à 3 groupes hydroxy, sont ceux du type connu en soi qu'on obtient par exemple par polymérisation d'époxydes comme l'oxyde d'éthylène, l'oxyde de propylène, l'oxyde de butylène, le tétrahydrofuranne, l'oxyde de styrène ou l'épichlorhydrine sur eux-mêmes, par exemple en présence de catalyseurs de Lewis tels que $BF_3$, ou par addition de ces époxydes de préférence de l'oxyde d'éthylène et de l'oxyde de propylène, éventuellement en mélange ou successivement, sur des composants de départ portant des atomes d'hydrogène réactif comme l'eau, les alcools, l'ammoniaqeue ou des amines, par exemple le 1,2-éthanediol, le 1,3 ou 1,2 propanédiol, le triméthylolpropane, le glycérol, le sorbitol, le 4,4'-dihydroxydiphénylpropane, l'aniline, l'éthanolamine ou l'éthylène-diamine. On peut également utiliser conformément à l'invention des polyéthers de saccharose ou des polyéthers condensés sur formitol ou sur formose. Dans de nombreux cas, on préfère les polyéthers contenant des proportions prépondérantes jusqu'à 90 % en poids, par rapport à tous les groupes OH présents dans le polyéther) de groupes OH primaires.

A titre de polythioters-polyols, on citera en particulier les produits de condensation du thiodiglycol sur lui-même et/ou sur d'autres glycols, des acides dicarboxyliques, du formaldéhyde, et des acides aminocarboxyliques ou des aminoalcools. Selon la nature du second composant, les produits obtenus sont par exemple des polythioéthers mélangés, des polythioéther-esters ou des polythioéther-ester-amides.

A titre d'illustration de polyacétals-polyols, on citera par exemple ceux qu'on peut préparer à partir de glycols comme le diéthylène-glycol, le triéthylène-glycol, le 4,4'-dihydroxyéthoxydiphényldiméthylméthane, l'hexane-diol et le formaldéhyde. On peut également utiliser dans l'invention des polyacétals obtenus par polymérisation d'écétals cyliques comme par exemple le trioxanne.

A titre d'illustration de polycarbonates portant des groupes hydroxy, on citera ceux de type connu en soi qu'on obtient par exemple par réaction de diols comme le propane-diol-1,3, le butane-diol-1,4 et/ou l'hexane-diol-1,6, le diéthylène-glycol, le triéthylène-glycol, le tétraéthylène-glycol ou le thiodiglycol, avec des carbonates de diaryle, par exemple le carbonate de diphényle, ou le phosgène;

A titre d'illustration de polyesteramides-polyols et polyamides-polyols, on citera par exemple les condensats principalement linéaires obtenus à partir d'acides carboxyliques polyvalents saturés ou insaturés et de leurs anhydrides et d'aminoalcools polyvalents saturés ou insaturés, diamines, polyamines et leurs mélanges.

On peut également utiliser des polyols contenant déjà des groupes uréthane ou urée, ainsi que des polyols naturels éventuellement modifiés comme l'huile de ricin.

A titre d'illustration de polydiènes-polyols utilisables selon la présente invention, on citera les oligomères de diène conjugué hydroxytélechélique qui peuvent être obtenus par différents procédés tels que la polymérisation radicalaire de diène conjugué ayant de 4 à 20 atomes de carbone en présence d'un amorceur de polymérisation tel que le peroxyde d'hydrogène ou un composé azoïque tel que l'azobis-2,2'[méthyl-2, N-(hydroxy-2éthyl)propionamide] ou la polymérisation anionique de diène conjugué ayant de 4 à 20 atomes de carbone en présence d'un catalyseur tel que le naphtalène dilithium.

Selon la présente invention, le diène conjugué du polydiène-polyol est choisi dans le groupe comprenant le butadiène, l'isoprène, le chloroprène, le pentadiène-1,3, le cyclopentadiène.

Selon la présente invention, on utilisera de préférence un polydiène-polyol à base de butadiène.

Conviennent également les copolymères de dienes conjugués et de monomères vinylique et acrylique tels que le styrène, l'acrylonitrile.

On ne sortirait pas de l'invention si on utilisait des oligomères hydroxytélécheliques de butadiène époxydés sur la chaîne ou bien encore des oligomères hydrogènés hydroxytélecheliques de diènes conjugués.

Selon la présente invention, les polydiènes-polyols peuvent avoir des masses moléculaires moyennes en nombre au plus égale à 7000 et de préférence comprise entre 1000 et 3000. Ils présentent des fonctionnalités allant de 1 à 5 et de préférence comprises entre 1,8 et 3.

A titre d'illustration de polydiènes-polyols, on citera les polybutadiènes hydroxylés commercialisés par la Société ELF ATOCHEM S.A. sous les dénominations Poly Bd®R45 HT et Poly Bd®R20 LM.

On peut utiliser des mélanges des composés précédemment mentionnés tels que par exemple des mélanges de polyéthers-polyols et de polydiènes-polyols.

On ne sortirait pas du cadre de l'invention si on utilisait des composés polyaminés ayant une masse moléculaire moyenne en nombre $\overline{Mn}$ comprise entre 500 et 5000.

A titre d'illustration de tels composés, on citera les polyoxypropylènes terminés par des fonctions NH2, les polyoxytétraméthylènes et les polybutadiènes terminés par des fonctions NH2, les copolymères butadiène/styrène et butadiène/acrylonitrile terminés par des fonctions NH2.

Par allongeur de chaîne, on désigne présentement des composés portant au moins deux fonctions réactives avec les fonctions isocyanates.

4

Comme exemples de telles fonctions réactives, on citera les fonctions hydroxyle et les fonctions amine.

Selon l'invention, l'allongeur de chaîne peut être choisi parmi les polyols de masse moléculaire comprise entre 62 et 500.

A titre d'illustration de tels composés, on citera l'éthylène glycol, le propylène glycol, le diéthylène glycol, le dipropylène glycol, le 1,4-butanediol, le 1,6-hexanediol, le 2-éthyl-1,3-hexanediol, le N,N bis(hydroxy-2 propyl)aniline, le 3-méthyl-1,5-pentanediol et le mélange d'au moins deux des composés précités.

On peut également utiliser comme allongeurs de chaîne des polyamines de masse moléculaire comprise entre 62 et 500.

A titre d'illustration de telles polyamines, on citera l'éthylène diamine, la diphényl méthane diamine, l'isophoronediamine, l'hexaméthylenediamine, la diéthyltoluènediamine.

On utilisera au moins une partie en poids d'un ou plusieurs allongeurs de chaîne précités pour 100 parties en poids de polyol mis en oeuvre et, de préférence 5 à 30 parties en poids.

Le catalyseur peut être choisi dans le groupe comprenant des amines tertiaires, des imidazoles et des composés organométalliques.

A titre d'illustration d'amines tertiaires, on peut citer le diaza-1,4 bicyclo[2.2.2] octane (DABCO).

A titre d'illustration de composés organométalliques, on peut citer le dibutyldilaurate d'étain, le dibutyldiacétate d'étain.

On utilisera des quantités de catalyseur comprises entre 0,01 et 5 parties en poids pour 100 parties en poids de polyol.

La composition selon l'invention peut contenir en outre des charges inertes et divers additifs tels que des anti-oxydants, des anti U-V.

Selon la présente invention, la composition plastifiée (I) à base de polyol peut être préparée en fondant l'additif viscosifiant puis ensuite en le mélangeant avec le plastifiant, le polyol, le ou les allongeurs de chaîne, le catalyseur, éventuellement avec des charges et des additifs dans un appareil muni de moyens d'agitation permettant une bonne homogénéisation des divers constituants de la composition.

On effectue le mélange de préférence à une température comprise entre 20°C et 1 00°C.

Sur la composition obtenue, on mesure la viscosité avec un rhéomètre.

Selon la présente invention, cette composition plastifiée (I) à base de polyol est utilisable notamment pour l'obtention d'un gel de polyuréthane. L'invention concerne aussi ces gels de polyuréthane.

Ce gel de polyuréthane peut être obtenu en mettant en contact la composition plastifiée (I) de la présente invention avec un ou plusieurs polyisocyanates. Les quantités de composition plastifiée (1) et de polyisocyanate peuvent par exemple être telles que le rapport molaire NCO/OH est compris entre 0,3 et 2 et, de préférence, compris entre 0,5 et 1.

Dans l'éventualité où l'on utilise un allongeur de chaîne, le rapport molaire NCO/OH devra être calculé en tenant compte de la présence des fonctions réactives avec les fonctions isocyanates, telles que les fonctions hydroxyles et/ou amines, dudit allongeur de chaîne.

Selon la présente invention, le polyisocyanate utilisé peut être un polyisocyanate aromatique, aliphatique ou cycloaliphatique ayant au moins deux fonctions isocyanate dans sa molécule.

A titre d'illustration de polyisocyanate aromatique, on citera le 4,4'-diphénylméthane diisocyanate (MDI), les MDI modifiés liquides, les MDI polymériques, le 2,4- et le 2,6-toluylène diisocyanate (TDI) ainsi que leur mélange, le xylylène diisocyanate (XDI), le triphénylméthane triisocyanate, le tétraméthylxylylène diisocyanate (TMXDI), le paraphénylène diisacyanate (PPDI), le naphtalene diisocyanate (NDI).

Parmi les polyisocyanates aromatiques, l'invention concerne de préférence le 4,4'-diphenylméthane diisocyanate et tout particulièrement les MDI polymériques.

A titre d'illustration de polyisocyanate aliphatique on citera l'hexaméthylène diisocyanate (HMDI) et ses dérivés, le triméthylhéxaméthylène diisocyanate.

A titre d'illustration de polyisocyanate cycloaliphatique on citera l'isophorone diisocyanate (IPDI) et ses dérivés, le 4,4'-dicyclohexylméthanediisocyanate et le cyclohexyl diisocyanate (CHDI).

On ne sortirait pas du cadre de l'invention si l'on utilisait des prépolymères d'isocyanates obtenus par réaction d'un polyisocyanate mentionné précédemment avec un polyol tel que notamment polyéther-polyol, polyester-polyol et polydiène-polyol ou avec une polyamine.

Le gel de polyuréthane selon la présente invention peut être obtenu en ajoutant sous agitation le ou les polyisocyanates à la composition plastifiée (I), puis on homogénéise pendant une durée qui peut aller de 1 à 5 minutes, et on coule la masse réactionnelle qui est abandonnée à température ambiante jusqu'à obtention du gel.

On déterminera ensuite des propriétés physiques du gel ainsi obtenu, notamment sa consistance qui est déterminée à l'aide d'un pénétromètre.

En réglant les proportions d'additif viscosifiant dans la composition plastifiée (I), on peut contrôler aisément la viscosité de ladite composition de façon à obtenir des viscosités au moins égales à 4 Pa.s à 20°C.

Ceci présente l'avantage d'avoir des compositions plastifiées à viscosité contrôlée qui se mettent en oeuvre aisément.

Les gels de polyuréthane obtenus avec les compositions de l'invention peuvent être utilisés dans le domaine de l'isolation de composants électriques ou électroniques ; ainsi que dans des applications paramédicales.

Les exemples qui suivent illustrent l'invention.

Les compositions ont été préparées en utilisant les constituants suivants :

- PolyBd®R45 HT: polybutadiène hydroxylé de $\overline{Mn}$ égale à 2800 (déterminée par chromatographie d'exclusion stérique), présentant un indice d'hydroxyle $I_{OH}$ exprimé en milliéquivalent par gramme (meq/g) égal à environ 0,83, une viscosité (mPa.s à 30°C) égale à 5000 et une densité égale à 0,90 ;
- Arcol 1010 : polyoxypropylène glycol de masse moléculaire moyenne en nombre $\overline{Mn}$ égale à 1 000 commercialisé par la société ARCO ;
- Baygal K55 : polyéthertriol commercialisé par la Société Bayer A.G. ;
- le 2-éthyl-1,3-hexanediol ;
- Edenol W300S : phtalate de diisotridécyle commercialisé par la Société Henkel ;
- le phtalate de dioctyle ci-après désigné par DOP commercialisé par la Société ELF ATOCHEM S.A.;
- la Jeffamine D2000 : polyoxypropylène terminé par des fonctions amines de masse moléculaire moyenne en nombre $\overline{Mn}$ égale à 2 000, commercialisé par la Société HUNTSMAN ;
- le dibutyldilaurate d'étain, ci-après désigné par DBTL ;
- EVATANE 28/150 : copolymère éthylène/acétate de vinyle ayant une teneur pondérale en acétate de vinyle égal à environ 28 % et présentant un indice de fluidité égale à environ 150 g/10 mn mesuré selon la norme NFT 51-016 ;
- EVATANE 33/400 : copolymère éthylène/acétate de vinyle ayant une teneur pondérale en acétate de vinyle égale à environ 33 % et présentant un indice de fluidité égale à environ 400 g/10 mn mesuré selon la norme NFT 51-016 ;
- LOTRYL 35BA320 : copolymère éthylène/acrylate de butyle contenant environ 65 % en poids d'unités dérivées de l'éthylène et environ 35 % en poids d'unités dérivées de l'acrylate de butyle et présentant un indice de fluidité d'environ 320 g/10 mn mesuré selon la norme NFT 51-016 ;
- LOTADER 6600 terpolymère éthylène/acrylate d'éthyle/anhydride maléique contenant environ 69 % en poids d'unités dérivées de l'éthylène, environ 28 % en poids d'unités dérivées de l'acrylate d'éthyle et environ 3 % en poids d'unités dérivées de l'anhydride maléique et présentant un indice de fluidité égale à 40 g/10 mn mesuré selon la norme NFT 51-016 ;
- OREVAC 9305 : terpolymère éthylène/acétate de vinyle/anhydride maléique ayant une teneur pondérale en acétate de vinyle égale à 28 % et une teneur pondérale en anhydride maléique égale à 1 %, présentant un indice de fluidité égale à 150 g/10 mn mesuré selon la norme NFT 51/016 ;
- DESMODUR VL : MDI polymérique ayant une teneur pondérale en fonction isocyanate égale à 31 % et une viscosité à 20°C égale à environ 130 mPa.s.

Préparation des compositions plastifiées (I)

L'additif viscosifiant est fondu à une température comprise entre 50°C et 130°C dans un réacteur muni d'une enveloppe à circulation de fluide et d'une agitation mécanique.

Ensuite, on ajoute les divers constituants : le plastifiant, le polyol, les allongeurs de chaîne, le catalyseur sous agitation (200 tr/mn) à une température comprise entre 20°C et 100°C.

Sur la composition plastifiée (I) ainsi obtenue, on détermine la viscosité au moyen d'un rhéomètre type CARRIMED à 20°C sous une pulsation de 10 rad/s.

Préparation du gel de polyuréthane

A la composition précedemment obtenue, on ajoute sous agitation le ou les polyisocyanates, on homogénéise en agitant pendant quelques minutes le milieu réactionnel qui est ensuite coulé puis abandonné à température ambiante jusqu'à réaction complète.

Sur le gel polyuréthane obtenu, on effectue le test dit de pénétration.

Dans ce test, on mesure la profondeur de la pénétration en dixième de millimètres (mm/10), à 30°C, d'un cône creux d'une masse totale égale à 150 g, appliquée pendant 5 secondes sur la surface du gel de polyuréthane. Initialement le cône creux ne touche pas la surface du gel. A titre indicatif, le cône creux s'enfonce dans le gel entre environ 60 mm/10 pour des gels dits "durs" et environ 300 mm/10 pour des gels dits "mous".

On effectue également l'essai dit "temps de vie en pot" ou "pot life".

Cet essai détermine un temps dit temps de prise.

Ce temps, exprimé en minutes, est compté à partir du moment ou l'on mélange la composition plastifiée (I) avec le polyisocyanate, jusqu'à ce que 100 g de masse réactionnelle, initialement à 20°C, ne soit plus coulable.

Les résultats sont rassemblés dans les tableaux 1, 2, 3, 4 et 5.

Dans ces tableaux, les proportions des divers constituants de la composition plastifiée (I) et des polyisocyanates utilisés pour obtenir le gel de polyuréthane sont exprimés en parties en poids, les viscosités mesurées à 20°C sous une pulsation de 10 rad/s sont exprimées en Pa.s, la pénétration en dixième de mm (mm/10) et le pot life en minutes.

Les exemples 1C (tableau 1), 5C (tableau 2), 14C et 16C (tableau 4) et 18C (tableau 5) sont non conformes à l'invention.

Dans le tableau 1, nous avons montré l'influence de la teneur en additif viscosifiant sur la viscosité de la composition plastifiée (I).

TABLEAU 1

| Exemples | 1C | 2 | 3 | 4 |
|---|---|---|---|---|
| **Constituants de la Composition plastifiée** (I) (parties en poids) | | | | |
| ♦ Poly Bd®R45HT | 100 | 100 | 100 | 100 |
| ♦ Baygal K55 | 10 | 10 | 10 | 10 |
| ♦ Edenol W300S | 633 | 633 | 633 | 633 |
| ♦ EVA 28/150 | | 33 | 67 | 100 |
| ♦ DBTL | 2,2 | 2,2 | 2,2 | 2,2 |
| **Poly isocyanate** (parties en poids) | | | | |
| ♦ DESMODUR VL | 21,6 | 21,6 | 21,6 | 21,6 |
| **Rapport molaire** NCO/OH | 1,05 | 1,05 | 1,05 | 1,05 |
| **Viscosité de la Composition plastifiée** (I) (Pa.s) | 0,5 | 4 | 70 | 280 |
| **Propriétés du GEL** | | | | |
| ♦ Pénétration (mm/10) | 120 | 97 | 85 | 69 |
| ♦ Pot life (minutes) | 480 | 420 | 150 | 180 |

Dans le tableau 2, nous avons montré l'influence de la nature de l'additif viscosifiant sur la viscosité de la composition plastifiée (I).

TABLEAU 2

| Exemples | 5C | 6 | 7 | 8 | 9 | 10 |
|---|---|---|---|---|---|---|
| **Constituants de la Composition plastifiée** (I) (parties en poids) | | | | | | |
| ♦ Poly Bd®R45HT | 100 | 100 | 100 | 100 | 100 | 100 |
| ♦ 2-éthyl-1,3-hexanediol | 10 | 10 | 10 | 10 | 10 | 10 |
| ♦ DOP | 633 | 633 | 633 | 633 | 633 | 633 |
| ♦ DBTL | 4,5 | 4,9 | 4,9 | 4,9 | 4,9 | 4,9 |
| ♦ EVATANE 28/150 | | 67 | | | | |
| ♦ EVATANE 33/400 | | | 67 | | | |
| ♦ LOTRYL 35 BA 320 | | | | 67 | | |
| ♦ OREVAC 9305 | | | | | 67 | |
| ♦ LOTADER 6600 | | | | | | 67 |
| **Poly isocyanate** (parties en poids) | | | | | | |
| ♦ DESMODUR VL | 26,8 | 26,8 | 26,8 | 26,8 | 26,8 | 26,8 |
| **Rapport molaire** NCO/OH | 0,90 | 0,90 | 0,90 | 0,90 | 0,90 | 0,90 |
| **Viscosité de la Composition plastifiée** (I) (Pa.s) | 0,2 | 70 | 20 | 40 | 70 | 150 |
| **Propriétés du GEL** | | | | | | |
| ♦ Pénétration (mm/10) | 98 | 78 | 78 | 76 | 68 | 68 |
| ♦ Pot life (minutes) | 510 | 180 | 180 | 180 | 180 | 180 |

Dans le tableau 3, nous avons reporté 3 compositions plastifiées ayant une viscosité controlée conduisant à des gels de polyuréthane ayant un temps de prise rapide (pot life), notamment pour la composition de l'exemple 13.

TABLEAU 3

| Exemples | 11 | 12 | 13 |
|---|---|---|---|
| **Constituants de la Composition plastifiée** (I) (parties en poids) | | | |
| ♦ Poly Bd®R45HT | 100 | 100 | 100 |
| ♦ 2-éthyl-1,3-hexane diol | 10 | 10 | |
| ♦ Jeffamine D 2000 | | | 30 |
| ♦ DOP | 633 | 633 | 633 |
| ♦ EVATANE 33/400 | 67 | | 67 |
| ♦ LOTADER 6600 | | 67 | |
| ♦ DBTL | 4,9 | 9,7 | 4,9 |
| **Poly isocyanate** (parties en poids) | | | |
| ♦ DESMODUR VL | 26,8 | 26,8 | 13,9 |
| **Rapport molaire** NCO/OH | 0,90 | 0,90 | 0,90 |
| **Viscosité de la Composition plastifiée** (I) (Pa.s) | 20 | 150 | 18 |
| **Propriétés du GEL** | | | |
| ♦ Pénétration (mm/10) | 78 | 68 | 124 |
| ♦ Pot life (minutes) | 180 | 150 | 25 |

Dans le tableau 4, on met en évidence l'aspect viscosifiant d'un copolymère éthylène/acétate de vinyle sur deux compositions différentes.

TABLEAU 4

| Exemples | 14C | 15 | 16C | 17 |
|---|---|---|---|---|
| **Constituants de la Composition plastifiée** (I) (parties en poids) | | | | |
| ♦ Poly Bd®R45HT | 100 | 100 | 100 | 100 |
| ♦ Baygal K 55 | 10 | 10 | | |
| ♦ 2-ethyl-1,3-hexanediol | | | 10 | 10 |
| ♦ DOP | | | 633 | 633 |
| ♦ Edenol W300S | 633 | 633 | | |
| ♦ EVATANE 28/150 | | 67 | | 67 |
| ♦ DBTL | 2,2 | 2,2 | 4,5 | 4,9 |
| **Poly isocyanate** (parties en poids) | | | | |
| ♦ DESMODUR VL | 21,6 | 21,6 | 26,8 | 26,8 |
| **Rapport molaire** NCO/OH | 1,05 | 1,05 | 0,90 | 0,90 |
| **Viscosité de la Composition plastifiée** (I) (Pa.s) | 0,5 | 70 | 0,2 | 70 |
| **Propriétés du GEL** | | | | |
| ♦ Pénétration (mm/10) | 120 | 85 | 98 | 78 |
| ♦ Pot life (minutes) | 480 | 150 | 510 | 180 |

Dans le tableau 5, on met en évidence l'aspect viscosifiant de deux copolymères acetate de vinyle sur une composition à base de polyoxypropylène glycol (ARCOL 1010).

TABLEAU 5

| Exemples | 18C | 19 | 20 | 21 |
|---|---|---|---|---|
| **Constituants de la Composition plastifiée** (I) (parties en poids) | | | | |
| ♦ ARCOL 1010 | 100 | 100 | 100 | 100 |
| ♦ DOP | 300 | 300 | 300 | 300 |
| ♦ EVATANE 28/150 | | | | 33 |

TABLEAU 5   (suite)

| Exemples | 18C | 19 | 20 | 21 |
|---|---|---|---|---|
| ♦ EVATANE 33/400 | | 33 | 67 | |
| ♦ DBTL | 1,5 | 1,5 | 1,5 | 1,5 |
| **Polyisocyanate** (parties en poids) | | | | |
| ♦ DESMODUR VL | 28,5 | 28,5 | 28,5 | 28,5 |
| **Rapport molaire** NCO/OH | 1,05 | 1,05 | 1,05 | 1,05 |
| **Viscosité de la Composition plastifiée** (I) (Pa.s) | 0,14 | 11,5 | 252 | 12,6 |
| **Propriétés du GEL** | | | | |
| ♦ Pénétration (mm/10) | 97 | 72 | 85 | 65 |
| ♦ Pot life (minutes) | >480 | >480 | 420 | >480 |

## Revendications

1. Composition plastifiée comprenant au moins un polyol, au moins un plastifiant, éventuellement un catalyseur, éventuellement un ou plusieurs allongeurs de chaînes, caractérisée en ce qu'elle comprend en plus une quantité suffisante d'un additif viscosifiant pour obtenir une viscosité à 20°C au moins égale à 4 Pa.s mesurée à une pulsation de 10 rad/s.

2. Composition selon la revendication 1, caractérisée en ce que l'on utilise une quantité suffisante d'un additif viscosifiant pour obtenir une viscosité à 20°C comprise entre 5 Pa.s et 300 Pa.s.

3. Composition selon l'une des revendications 1 ou 2, caractérisée en ce que l'additif viscosifiant est choisi parmi :

   a/ les copolymères d'éthylène et d'au moins une $\alpha$-oléfine possédant de 3 à 8 atomes de carbone ayant une densité allant de 0,89 à 0,95 environ,
   b/ les copolymères d'éthylène et d'au moins un ester vinylique d'acide carboxylique saturé ayant 2 à 6 atomes de carbone.
   c/ les copolymères éthylène/ester d'acide insaturé,
   d/ les terpolymères qui, en plus des motifs dérivés de l'éthylène et ceux d'un ester vinylique d'acide carboxylique saturé ou en plus des motifs dérivés de l'éthylène et ceux dérivés d'un ester d'acide insaturé comprennent des motifs dérivés d'un anhydride d'acide insaturé.
   e/ les terpolymères qui, en plus des motifs dérivés de l'éthylène et ceux dérivés d'un ester d'acide insaturé comprennent des motifs dérivés d'un monomère glycidylique insaturé,
   f/ les polymères greffés résultant du greffage d'au moins un monomère choisi parmi les acides carboxyliques à insaturation éthylénique, les anhydrides correspondant et les dérivés de ces acides et anhydrides d'acides, sur les copolymères a/, b/, c/ et sur les terpolymères d/.

4. Composition selon l'une des revendications 1 à 3, caractérisée en ce que l'additif viscosifiant est un terpolymère éthylène/acétate de vinyle/anhydride maléique.

5. Composition selon l'une des revendications 1 à 4, caractérisée en ce que le polyol est choisi parmi les polyesters-polyols, les polyéthers-polyols, les polythiothers-polyols, les polyécétals-polyols, les polycarbonates-polyols, les polyesteramides-polyols, les polyamides-polyols, les polydiènes-polyols

6. Composition selon l'une des revendications 1 à 5, caractérisée en ce qu'elle comprend au moins 10 parties en poids de plastifiant pour 100 parties en poids de polyol et de préférence 50 à 1000 parties.

7. Gel de polyuréthane résultant de la réaction d'une composition selon l'une quelconque des revendications précédentes avec au moins un polyisocyanate.

8. Gel de polyuréthane selon la revendication 7 caractérisé en ce que le polyisocyanate est un 4,4' diphenylméthane diisocyanate (MDI) ou un MDI polymérique.

9. Gel selon l'une des revendications 7 et 8, caractérisé en ce que le rapport molaire des fonctions isocyanates sur les fonctions hydroxyles de la composition plastifiée est compris entre 0,3 et 2 et, de préférence, compris entre 0,5 et 1.

**EP 0 784 070 A1**

Office européen
des brevets

**RAPPORT DE RECHERCHE EUROPEENNE**

Numero de la demande

EP 96 40 2604

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 355 130 A (HEINZE RICHARD E) 19 Octobre 1982<br>* revendications 1,5,9,10,12,13 *<br>* colonne 4, ligne 18 - ligne 63 *<br>* colonne 5, ligne 4 - ligne 23 *<br>--- | 1 | C08K5/10<br>C08L75/04<br>//(C08L75/04, 23:08),<br>(C08L75/04, 51:06) |
| A | FR 2 299 350 A (DOW CHEMICAL CO) 27 Août 1976<br>* revendications 1-7 *<br>* page 1, ligne 14 - page 2, ligne 40 *<br>--- | 1 | |
| A | FR 1 568 968 A (DOW) 30 Mai 1969<br>* page 3, colonne de gauche, alinéa 2 - colonne de droite, alinéa 1 *<br>* page 2, colonne de gauche, alinéa 2 *<br>--- | 1 | |
| D,A | US 4 666 968 A (DOWNEY WILLIAM J ET AL) 19 Mai 1987<br>* revendications 1,6-8 *<br>* colonne 5, ligne 54 - ligne 65 *<br>* colonne 7, ligne 42 - ligne 65 *<br>----- | 1 | |

DOMAINES TECHNIQUES RECHERCHES (Int.Cl.6)

C08K
C08L

Le présent rapport a été établi pour toutes les revendications

| Lieu de la recherche | Date d'achèvement de la recherche | Examinateur |
|---|---|---|
| LA HAYE | 19 Mars 1997 | Van Puymbroeck, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)